# EUROPEAN PATENT APPLICATION

(11) **EP 4 507 167 A1**
(43) Date of publication of application: **12.02.2025**
(21) Application number: 23914408.2
(22) Date of filing: 13.11.2023
(51) Int. Cl.: H02K 1/16, H02K 3/12, H02K 3/48, H02K 3/50

(54) **STATOR ASSEMBLY AND MOTOR**

(30) Priority: 05.01.2023 CN 202310015400
(71) Applicant: ZHEJIANG ZEEKR INTELLIGENT TECHNOLOGY CO., LTD., Ningbo, Zhejiang 315899 (CN); VIRIDI E-MOBILITY TECHNOLOGY (NINGBO) CO., LTD., Ningbo, Zhejiang 315336 (CN); Zhejiang Geely Holding Group Co., Ltd., Hangzhou, Zhejiang 310051 (CN)
(72) Inventor: HE, Haijiao, Ningbo, Zhejiang 315336 (CN); ZHANG, Li, Ningbo, Zhejiang 315336 (CN); ZHU, Dianye, Ningbo, Zhejiang 315336 (CN); LAN, Xiaodong, Ningbo, Zhejiang 315336 (CN)
(74) Representative: Studio Torta S.p.A.
(86) International application number: PCT/CN2023/131360
(87) International publication number: WO 2024/146272

(57) **Abstract**

The present application belongs to the field of drive motors for new energy vehicles, and more specifically, relates to a stator assembly and a motor. The present application aims to solve the problems of high insulation cost and low power density of motors. The stator assembly of the present application includes a multi-phase winding and a stator core being provided with a stator slot. A branch includes a first coil group, a second coil group and a connecting wire. The first coil group includes N first winding parts and N-1 first variable-layer lines, and the first winding part includes a plurality of coil sets, the coil set includes a first cross-layer unit and a first variable-pitch unit; a span of the first variable-pitch unit is greater than or less than the pole pitch of motor; the first variable-layer line connects two adjacent first winding parts, and a span *y1* of the first variable-layer line is set as: *y*-2≤*y1*≤*y*+2; the second variable-layer line connects with two adjacent second winding parts, and a span y2 of the second variable-layer line is set as: *y2=y.* The present stator assembly simplifies the wire insertion process of the multi-phase winding, improves the manufacturing efficiency of the motor, and reduces the insulation cost of the motor.

## Description

The present application claims priority to Chinese Patent Application No. 202310015400.9, entitled "STATOR ASSEMBLY AND MOTOR", and filed with the China National Intellectual Property Administration on January 05, 2023, which is hereby incorporated by reference in its entirety.

### TECHNICAL FIELD

The present application belongs to the technical field of drive motors for new energy vehicles, and more specifically, relates to a stator assembly and a motor.

### BACKGROUND

Electric vehicles have leading advantages over traditional fuel vehicles in terms of power, intelligence, cost of use and so son. A drive motor may be a flat wire motor, and the stator assembly of the flat wire motor includes a stator core and a multi-phase winding. The stator core has a plurality of stator slots distributed circumferentially, and each stator slot is provided with multi-layer conductors constituting the multi-phase winding.

In the related art, the multi-phase winding in the stator assembly is a short-distance winding, so that the multi-layer conductors in a same slot are located in different phases. Therefore, it is necessary to arrange an insulating paper between the conductors which are in the different phases of the same stator slot so as to isolate the conductors in different phases by the insulating paper.

However, the insulating paper reduces the slot filling rate of the stator assembly, reduces the power density of the drive motor, increases the insulation cost of the drive motor, and allows for an increase in the temperature rise of the winding.

### SUMMARY

In order to solve the above-mentioned problem in the background technology, that is, to solve the problem that multi-layer conductors in a same stator slot belonging to different phases results in high insulation cost and low power density of the motor. On one hand, the present application provides a stator assembly applied to the motor, including a stator core and a multi-phase winding, where: the stator core is evenly provided with a plurality of stator slots along a circumferential direction of the stator core, and each of the stator slots has M slot-layers arranged along a radial direction of the stator core, and M is an even number greater than or equal to 4;
each phase of the winding includes at least two parallel branches, and each of the branches includes a first coil group, a second coil group, and a connecting wire for connecting the first coil group and the second coil group;
the first coil group includes N first winding parts and N-1 first variable-layer lines, and the N first winding parts are sequentially arranged along the radial direction of the stator core, where N=M/2; each of the first winding parts is correspondingly arranged in two adjacent layers of the slot-layers, and the first winding part is configured as follows: in corresponding two layers of the slot-layers, the first winding part is formed by connecting a plurality of coil sets in series, each coil set includes one or two of a first cross-layer unit and a first variable-pitch unit, and at least one coil set of the plurality of coil sets includes the first cross-layer unit and the first variable-pitch unit; a span y of the first cross-layer unit is set as a pole pitch of the motor, and a span of the first variable-pitch unit is greater than or less than the pole pitch of the motor; each first variable-layer line connects two adjacent first winding parts, and a span *y1* of the first variable-layer line is set as: *y*-2≤*y1*≤*y*+2;
the second coil group includes N second winding parts and N-1 second variable-layer lines, the N second winding parts are sequentially arranged along the radial direction of the stator core; each of the second winding parts is correspondingly arranged in two adjacent layers of the slot-layers, and the second winding part is configured as follows: in corresponding two layers of the slot-layers, the second winding part enters from one of the slot-layers, and is sequentially wound across layers along a second direction on a circumference of the stator core with a span *y*, and the second direction is different from the first direction; the second variable-layer line connects two adjacent second winding parts, and a span *y*2 of the second variable-layer line is set as: y2=y; and
the connecting wire is wound in an outermost layer of the slot-layers or an innermost layer of the slot-layers with a span k, a first end of the connecting wire is connected to a terminal end of the first winding part, a second end of the connecting wire is connected to a starting end of the second winding part, and the span *k* of the connecting wire is set as: *y-*2≤*k*≤*y+*2*.*

In one implementation, the first winding part is configured as a multi-turn-type first winding part; in the corresponding two layers of the slot-layers, one end of the first cross-layer unit is arranged in one of the slot-layers, and the other end of the first cross-layer unit is arranged in the other slot-layer; one end of the first variable-pitch unit is arranged in one of the slot-layers, and the other end of the first variable-pitch unit is arranged in the other slot-layer; and
the plurality of first cross-layer units are connected in series along the first direction on the circumference of the stator core, and the first variable-pitch unit is configured for connecting two adjacent first cross-layer units of the multi-turn-type first winding part; in the two adjacent first cross-layer units in different turns of the multi-turn-type first winding part, one end of the first variable-pitch unit is connected to one of the first cross-layer units, and the other end of the first variable-pitch unit is connected to the other first cross-layer unit.

In one implementation, in the multi-turn-type first winding part, the first cross-layer unit is set as a U-shaped first cross-layer unit, and the first variable-pitch unit is set as a U-shaped first variable-pitch unit; in the corresponding two layers of the slot-layers, an end portion of the U-shaped first cross-layer unit is connected to an end portion of another adjacent U-shaped first cross-layer unit, and the end portion of the U-shaped first cross-layer unit is connected to an end portion of the adjacent U-shaped first variable-pitch unit; and/or,
in the multi-turn-type second winding part, the second cross-layer unit is set as a U-shaped second cross-layer unit, and the second variable-pitch unit is set as a U-shaped second variable-pitch unit; in the corresponding two layers of the slot-layers, an end portion of the U-shaped second cross-layer unit is connected to an end portion of another adjacent U-shaped second cross-layer unit, and the end portion of the U-shaped second cross-layer unit is connected to an end portion of the adjacent U-shaped second variable-pitch unit.

In one implementation, the second winding part is configured as a spiral-type second winding part, and a plurality of the second cross-layer units are sequentially connected along the second direction on the circumference of the stator core to form the spiral-type second winding part, and the spiral-type second winding part is connected to a second end of the connecting wire.

In one implementation, the connecting wire is wound in an outermost layer of the slot-layers or an innermost layer of the slot-layers with the span k, and the connecting wire is arranged along the first direction, or the connecting wire is arranged along the second direction.

In one implementation, the first coil group further includes a first lead terminal, the first lead terminal is a first S-shaped conductor, and the first S-shaped conductor is located at one of an outermost layer of the slot-layers and an innermost layer of the slot-layers;
the second coil group further comprises a second lead terminal, the second lead terminal is a second S-shaped conductor, and the second S-shaped conductor is located at the other one of the outermost layer of the slot-layers and the innermost layer of the slot-layers.

In one implementation, one of the first lead terminal and the second lead terminal is configured as a lead-in wire, and the other one is configured as a lead-out wire.

In one implementation, the stator slots are 54 in number, a magnetic pole is 6 in number, and the pole pitch is set to 9.

In one implementation, the multi-phase winding is configured as a three-phase winding, each phase of the windings has same winding rule on the stator core with a phase difference in spatial phase between every two phases of the winding being set to 120°, and the three-phase winding is configured in a star connection or an angular connection.

On the other hand, the present application provides an electrode, including the stator assembly as described above.

It can be understood by the person skilled in the art that in the stator assembly provided by the embodiments of the present application, each phase of the winding includes at least two parallel branches, and each of the branches includes a first coil group, a second coil group, and a connecting wire for connecting the first coil group and the second coil group. Where, the first winding part of the first coil group enters from one slot-layer, and is sequentially wound across the layers along a first direction on the circumference of the stator core with a span y; the first variable layer line connects two adjacent first winding parts, and a span *y1* of the first variable layer line is set as: *y*-2≤*y1*≤*y*+2, so that N first winding parts are arranged in sequence along a radial direction of the stator core; a second winding part of the second coil group enters from one slot-layer, and is sequentially wound across the layers along a second direction on the circumference of the stator core with a span y; the first variable layer line connects two adjacent first winding parts, and the span *y1* of the first variable layer line is set as: *y*-2≤*y1*≤*y*+2, so that N first winding parts are arranged in sequence along the radial direction of the stator core; and a terminal end of the first winding part is connected to a starting end of the second winding part through a connecting wire, thereby realizing the winding process of each phase.

Through the above-mentioned winding method, all the winding wires arranged in the same stator slot belong to a same phase, thereby eliminating the insulating paper used to isolate the winding wires of different phases in the same stator-slot, improving the slot filling rate of the motor, thereby improving the power density of the motor and reducing the insulation cost of the motor. In addition, through the above-mentioned winding method, the magnetic circuits of each branch in each phase winding can be made completely symmetrical, eliminating the circulation problem caused by the asymmetric structure, improving the efficiency of the motor, and reducing the temperature rise of the motor. Moreover, since the insulating paper in the same stator slot is eliminated, the wire insertion process of the multi-phase winding is simplified, the manufacturing efficiency of the motor is improved, and the insulation cost of the motor is reduced.

### BRIEF DESCRIPTION OF DRAWINGS

FIG. 1 is a structurally schematic diagram of a stator assembly of an embodiment of the present application.
FIG. 2 is a structurally schematic diagram of a hairpin end of the stator assembly in FIG. 1.
FIG. 3 is a structurally schematic diagram of a welding end of the stator assembly in FIG. 1.
FIG. 4 is a structurally schematic diagram of stator slots on a stator core in FIG. 1.
FIG. 5 is a structurally schematic diagram of a multi-phase winding of the stator assembly in FIG. 1 when only a phase A winding is shown.
FIG. 6 is a structurally schematic diagram of a first branch of phase A in the multi-phase winding in FIG. 1.
FIG. 7 is a structurally schematic diagram of a U-shaped conductor in some implementations of an embodiment of the present application.
FIG. 8 is a structurally schematic diagram of a U-shaped conductor in some other implementations of an embodiment of the present application.
FIG. 9 is a structurally schematic diagram of a U-shaped conductor in some other implementations of an embodiment of the present application.
FIG. 10 is a structurally schematic diagram of a first S-shaped conductor of an embodiment of the present application.
FIG. 11 is a schematic diagram of phase belt distribution of a multi-phase winding in Embodiment 1 of the present application.
FIG. 12 is a schematic diagram of a winding rule of a first coil group of the first branch of phase A in Embodiment 1 of the present application.
FIG. 13 is a schematic diagram of a winding rule of a second coil group of the first branch of phase A in Embodiment 1 of the present application.
FIG. 14 is a schematic diagram of a winding rule of a winding A1X1 for a first branch of phase A in Embodiment 1 of the present application.
FIG. 15 is a schematic diagram of a winding rule of a winding A2X2 for a second branch of phase A in Embodiment 1 of the present application.
FIG. 16 is an unfolded schematic diagram of phase A winding in Embodiment 1 of the present application.
FIG. 17 is a schematic diagram of a star connection of a three-phase winding in Embodiment 1 of the present application.
FIG. 18 is a schematic diagram of an angular connection of a three-phase winding in Embodiment 1 of the present application.
FIG. 19 is a schematic diagram of a winding rule of a winding A1X1 for a first branch of phase A in Embodiment 2 of the present application.
FIG. 20 is a schematic diagram of a winding rule of a winding A2X2 for a second branch of phase A in Embodiment 2 of the present application.
FIG. 21 is a schematic diagram of a winding rule of a winding A1X1 for a first branch of phase A in Embodiment 3 of the present application.
FIG. 22 is a schematic diagram of a winding rule of a winding A2X2 for a second branch of phase A in Embodiment 3 of the present application.
FIG. 23 is a schematic diagram of a winding rule of a winding A1X1 for a first branch of phase A in Embodiment 4 of the present application.
FIG. 24 is a schematic diagram of a winding rule of a winding A2X2 for a second branch of phase A in Embodiment 4 of the present application.

### DESCRIPTION OF EMBODIMENTS

In a related technology, a stator assembly is an important component of a motor, and in electric vehicles, the motor needs to meet the requirements of light weight, high power density and high efficiency. Compared with general round copper wire motors, the bare copper slot filling rate of a flat wire motor may reach 60% or more, which is much higher than the bare copper slot filling rate of round copper wire of 40%. In a case that the number of circumferential slots of the stator core in the motor remains unchanged, increasing the slot filling rate may reduce the DC resistance of the stator winding in the motor, lower the copper loss of the motor, and improve the efficiency of the motor. Therefore, the use of a flat wire motor as the motor has become an important measure to promote the lightweight of electric vehicles, improve the cruising range of electric vehicles, and reduce the cost of powertrain.

In order to achieve fast charging of electric vehicle and improve the power density of electric vehicle drive system, high voltage requirements are put forward for motors of electric vehicles. In the related art, a multi-phase winding in the stator assembly is usually a short-distance winding, so that the multi-layer conductors in a same stator slot are located at different phases. Therefore, it is necessary to arrange an insulating paper between the conductors located at different phases in the same stator slot so as to isolate the conductors of different phases by the insulating paper. However, the arrangement of insulating paper not only reduces the slot filling rate of the motor, but also increases the copper loss of the motor and the temperature rise of the stator winding of the motor, limits the power density of the motor, and also increases the insulation cost of the motor.

Regarding the above problems, a stator assembly and a motor are provided by an embodiment of the present application, where each phase winding of the stator assembly includes at least two parallel branches, each branch includes a first coil group, a second coil group, and a connecting wire for connecting the first coil group and the second coil group. Where, the first winding part of the first coil group enters from one slot-layer, and is sequentially wound across the layers along a first direction on the circumference of the stator core with a span y; the first variable layer line connects two adjacent first winding parts, and a span *y1* of the first variable layer line is set as: *y-*2≤*y1*≤*y+*2, so that N first winding parts are arranged in sequence along a radial direction of the stator core; a second winding part of the second coil group enters from a slot-layer, and is sequentially wound across the layers along a second direction on the circumference of the stator core with a span y; the first variable layer line connects two adjacent first winding parts, and the span *y1* of the first variable layer line is set as: *y*-2≤*y1*≤*y*+2, so that N first winding parts are arranged in sequence along the radial direction of the stator core; and a terminal end of the first winding part is connected to a starting end of the second winding part through a connecting wire, thereby realizing the winding process of each phase.

Through the above-mentioned winding method, all the winding wires arranged in the same stator slot belong to a same phase, thereby eliminating the insulating paper used to isolate the winding wires of different phases in the same stator slot, improving the slot filling rate of the motor, improving the power density of the motor and reducing the insulation cost of the motor. In addition, through the above-mentioned winding method, the magnetic circuits of each branch in each phase winding can be made completely symmetrical, eliminating the circulation problem caused by the asymmetric structure, improving the efficiency of the motor, and reducing the temperature rise of the motor. Moreover, since the insulating paper in the same stator slot is eliminated, the wire insertion process of the multi-phase winding is simplified, the manufacturing efficiency of the motor is improved, and the insulation cost of the motor is reduced.

The stator assembly of an embodiment of the present application is described below with reference to the drawings.

First, relevant technical terms in a motor involved in the embodiments of the present application are explained and illustrated.

Number of motor pole: that is, the number of magnetic poles of the motor. The magnetic poles are divided into N pole and S pole. Generally, one N pole and one S pole are collectively called a pair of magnetic poles, that is, the number of pole pair (P) of the motor is 1.

Number of slots per pole per phase: the number of slots occupied by each phase winding under each magnetic pole is called the number of slots per pole per phase.

Number of phases of a motor: the number of phases of a motor generally refers to how many phase wires (i.e. live wires) are used. For example, a three-phase motor uses three phase wires. The number of phases of a motor is usually defined by the number of outlet terminals (excluding neutral wires) on the stator side of the motor.

Phase belt of a motor: that is, the number of slots on the stator core that are consecutively occupied per pole per phase winding.

Slot filling rate: it refers to a ratio of a cross-sectional area of the conductor in the slot of the stator core to an effective area of the slot body.

Pole pitch of a motor: that is, a distance between two adjacent magnetic poles along the surface of the stator core.

Span: also known as pitch, which refers to a distance between two effective edges of a same conductor in a winding of a motor across an armature surface, usually expressed in the number of slots.

Full pitch: that is, the pitch is equal to the pole pitch.

Short pitch: that is, the pitch is smaller than the pole pitch.

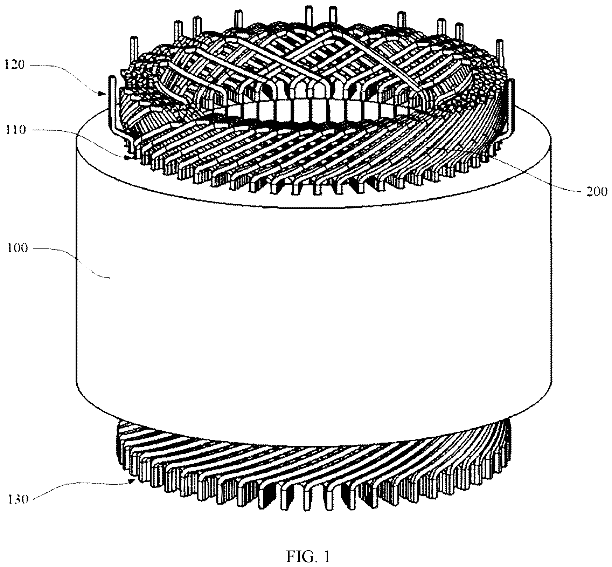

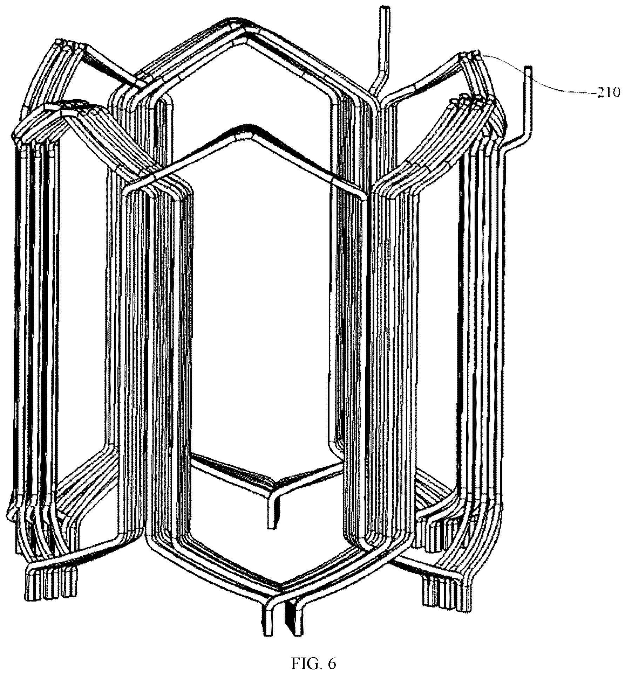

A stator assembly is provided by an embodiment of the present application, and is applied to a motor. Referring to FIG. 1, FIG. 4 and FIG. 6, the stator assembly includes a stator core 100 and a multi-phase winding 200. The stator core 100 is uniformly provided with a plurality of stator slots 110 along a circumferential direction of the stator core 100, each stator slot 110 has M slot-layers arranged along a radial direction of the stator core 100, where M is an even number greater than or equal to 4. The stator slot 110 may have 6 slot-layers, and the 6 slot-layers may be layers *a, b, c, d, e,* and *f* in sequence along a direction from the slot bottom to the slot opening. Exemplarily, a-layer slot-layer, i.e., the first slot-layer, is at the innermost side of the stator slot 110, and the f-layer slot-layer, i.e., the sixth slot-layer, is at the outermost side of the stator slot 110. It can be understood that the a-layer slot-layer may also be at the outermost side of the stator slot 110, and the f-layer slot-layer may also be at the innermost side of the stator slot 110. It should be noted that the slot-layer may be understood as a space for the wiring of windings that is arranged sequentially in a direction of slot depth of the same stator slot 110, and the space may be a virtual space inside the stator slot 110 to facilitate describing the position of the winding along the direction of the slot depth of the stator slot 110 when the winding is wired in the stator slot 110.

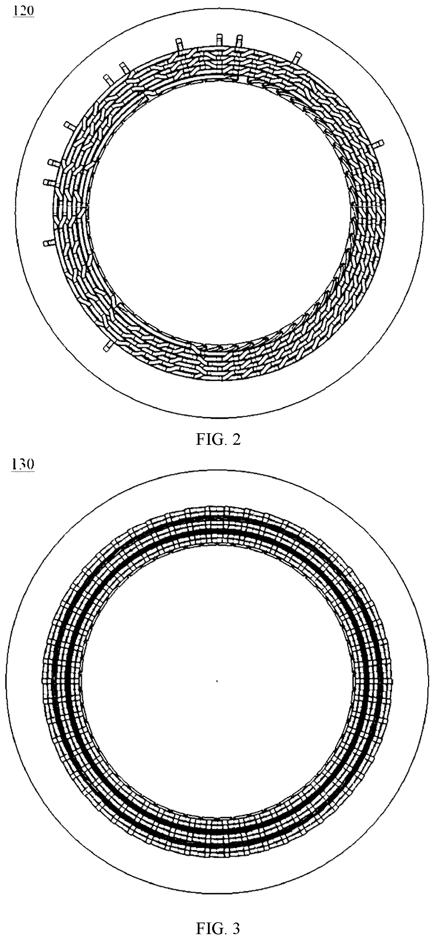

Referring to FIG. 2 and FIG. 3, two end surfaces of the stator core 100 may be respectively defined as a hairpin end 120 and a welding end 130, and the multi-phase winding 200 may be inserted into the interior of the stator core 100 from the side of the hairpin end 120, and may be welded at the welding end 130. Exemplarily, the hairpin end 120 may be located at the top end of the stator core 100, and the welding end 130 may be located at the bottom end of the stator core 100.

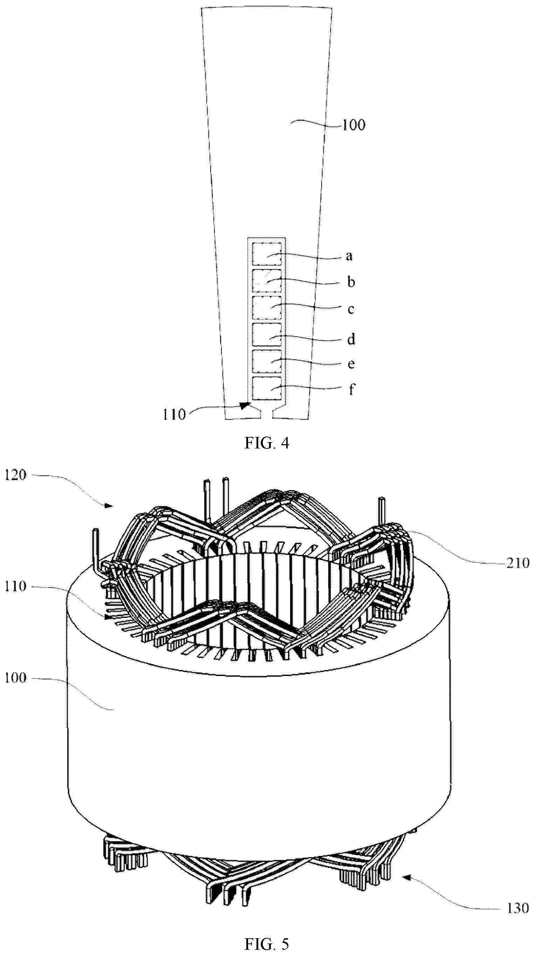

The multi-phase winding 200 means a plurality of phase windings, and the plurality of phase windings are different from each other in electrical phase. Exemplarily, the multi-phase winding 200 may be a three-phase winding, and the winding rules of three phase windings on the stator core 100 may be the same with a spatial phase difference of 120°. In other words, the multi-phase winding 200 may include three phase windings, such as a phase A winding 210, a phase B winding, and a phase C winding. The three phase windings may be in star connection or angular connection. Referring to FIG. 5, it is a structurally schematic diagram of a stator assembly of the present application when only the stator core 100 and the phase A winding 210 are shown.

Each phase winding includes at least two parallel branches, and each branch includes a first coil group, a second coil group, and a connecting wire for connecting the first coil group and the second coil group.

The first coil group includes N first winding parts and N-1 first variable layer lines, and the N first winding parts are sequentially arranged along the radial direction of the stator core 100, where N=M/2. Each first winding part is correspondingly arranged in two adjacent slot-layers, and the first winding part is configured as follows: in the corresponding two slot-layers, the first winding part is formed by connecting a plurality of coil sets in series, and the coil set includes one or two of a first cross-layer unit and a first variable-pitch unit, and at least one coil set in the plurality of coil sets includes the first cross-layer unit and the first variable-pitch unit. A span y of the first cross-layer unit is set as a pole pitch of the motor, and the span of the first variable-pitch unit is greater than or less than the pole pitch of the motor. The first variable layer line connects two adjacent first winding parts, and a span *y1* of the first variable layer line is set as: *y-*2≤*y1*≤*y+*2*.*

The first variable layer line connects two adjacent first winding parts, and a span *y1* of the first variable layer line is set as: *y-*2≤*y1*≤*y+*2*.* The second coil group includes N second winding parts and N-1 second variable layer lines, and the N second winding parts are arranged in sequence along the radial direction of the stator core 100. Each second winding part is correspondingly arranged in two adjacent slot-layers, and the second winding part is configured as follows: in the corresponding two slot-layers, the second winding part enters from one of the slot-layers, and is sequentially wound across the layers along a second direction on the circumference of the stator core 100 with a span *y*, the second direction being opposite to the first direction. The second variable layer line connects two adjacent second winding parts and a span *y*2 of the second variable layer line is set as: *y2=y.*

The connecting wire is wound in the outermost slot-layer or the innermost slot-layer with a span k, and a first end of the connecting wire is connected to the terminal end of the first winding part and a second end of the connecting wire is connected to the starting end of the second winding part. The span *k* of the connecting wire is set as: *y-*2≤*k*≤*y+*2*.*

Exemplarily, the first direction may be a clockwise direction when viewed from the hairpin end 120 of the stator core 100, and the second direction may be a counterclockwise direction when viewed from the hairpin end 120 of the stator core 100. It can be understood that the first direction and the second direction may also be interchangeable.

It should be noted that the slot-layers of the stator core 100 may be divided into N groups of two adjacent slot-layers, so that the N groups of two adjacent slot-layers can be arranged to correspond to the N first winding parts or the N second winding parts, respectively. Exemplarily, the 1st slot-layer and the 2nd slot-layer may be the 1st group of two adjacent slot-layers, the 3rd slot-layer and the 4th slot-layer may be the 2nd group of two adjacent slot-layers, and so on, the (M-1)th slot-layer and the Mth slot-layer may be the (M/2)th group of two adjacent slot-layers.

In some possible embodiments, the first winding part may be configured as a multi-turn-type first winding part, and the multi-turn-type first winding part may include a plurality of first cross-layer units and a plurality of first variable-pitch units. In the corresponding two slot-layers, one end of the first cross-layer unit is arranged in one of the two slot-layers, and the other end of the first cross-layer unit is arranged in the other slot-layer; one end of the first variable-pitch unit is arranged in one of the two slot-layers, and the other end of the first variable-pitch unit is arranged in the other slot-layer. The plurality of first cross-layer units may be connected in sequence along the first direction on the circumference of the stator core 100, and the first variable-pitch unit connects with two adjacent first cross-layer units in different turns of the multi-turn-type first winding part. In the two adjacent first cross-layer units in different turns of the multi-turn-type first winding part, one end of the first variable-pitch unit may be connected to one of the first cross-layer units, and the other end of the first variable-pitch unit is connected to the other first cross-layer unit.

In the multi-turn-type first winding part, the first cross-layer unit may be set as a U-shaped first cross-layer unit, and the first variable-pitch unit may be set as a U-shaped first variable-pitch unit; in the corresponding two slot-layers, the end portion of the U-shaped first cross-layer unit may be connected to the end portion of another adjacent U-shaped first cross-layer unit by welding, and the end portion of the U-shaped first cross-layer unit may be connected to the end portion of the adjacent U-shaped first variable-pitch unit by welding; and/or,
in the multi-turn-type second winding part, the second cross-layer unit is set as a U-shaped second cross-layer unit, and the second variable-pitch unit is set as a U-shaped second variable-pitch unit; in the corresponding two slot-layers, the end portion of the U-shaped second cross-layer unit is connected to the end portion of another adjacent U-shaped second cross-layer unit by welding, and the end portion of the U-shaped second cross-layer unit is connected to the end portion of the adjacent U-shaped second variable-pitch unit by welding.

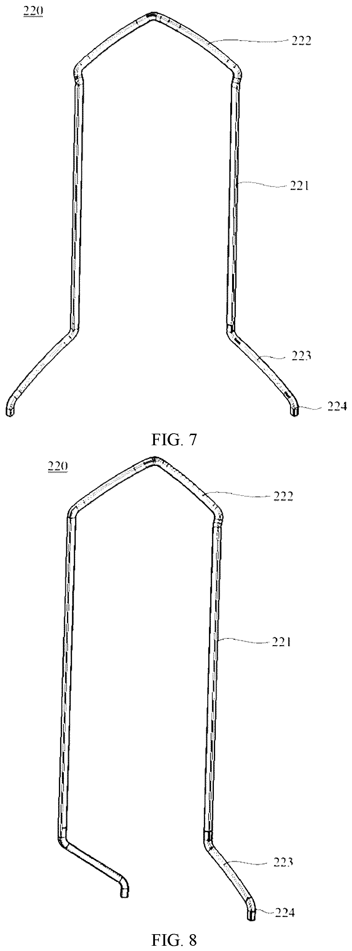

In some possible embodiments, the U-shaped first cross-layer unit, the U-shaped first variable-pitch unit, the U-shaped second cross-layer unit, and the U-shaped second variable-pitch unit may all be made of a U-shaped conductor 220. Exemplarily, referring to FIG. 7, the U-shaped conductor 220 may include a first effective edge 221, a first hairpin end 222, and a first twisting head 223. The number of the first effective edge 221 is set to two, and the two first effective edges 221 are arranged opposite to each other. The two first effective edges 221 are respectively arranged in the slot-layers of different stator slots 110, either in a same layer or in different layers. The first hairpin end 222 is connected with the first ends of the two first effective edges 221, and the first hairpin end 222 may be located at the hairpin end 120 of the stator core 100.

In some possible embodiments, the second end of each first effective edge 221 may be provided with a first twisting head 223, and the twisting directions of the two first twisting heads 223 may be arranged oppositely and away from each other. In some other possible embodiments, referring to FIG. 8, the twisting directions of the two first twisting heads 223 may be the same and may be deflected to the left at the same time.

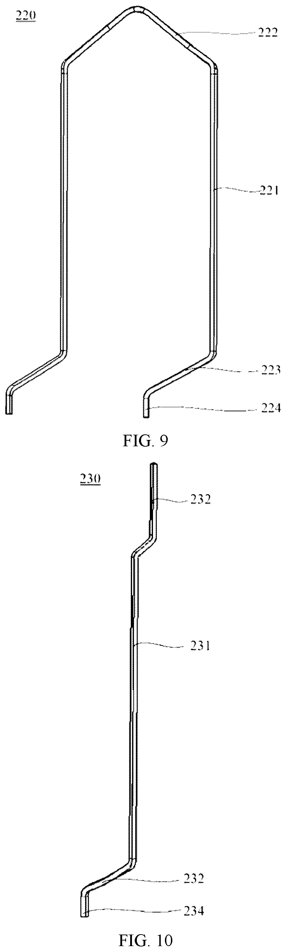

In some other implementations of the embodiments of the present application, referring to FIG. 9, the twisting directions of the two first twisting heads 223 may be the same and may be deflected to the right at the same time. The end portion of the first twisting head 223 is a first welding end 224. The first welding ends 224 of different U-shaped conductors 220 may be welded to form a coil. U-shaped conductors 220 of different structures may be selected according to the specific structures of the first coil group, the second coil group and the connecting wire of the same layer.

It is easy to be understood that the multi-turn-type first winding part is configured as winding by multiple turns on the stator core 100, and a total number of turns of the first winding part and the second winding part needs to be adjusted according to the number of stator slots 110 and the pole pitch of the motor. In some possible embodiments, the number of stator slots 110 is set to 54, the number of magnetic poles of the motor is set to 6, and the pole pitch of the motor is set to 9. Therefore, in 9 adjacent stator slots 110, each phase winding is correspondingly arranged in the adjacent three stator slots 110. Exemplarily, the total number of turns of the first winding part and the second winding part is equal to the number of stator slots 110 corresponding to each phase winding, that is, the total number of turns of the first winding part and the second winding part is set to 3.

In some possible embodiments, the first winding part is configured as a multi-turn-type first winding part, and the number of turns of the multi-turn-type first winding part is set to 2; the second winding part is configured as a spiral-type second winding part, and a plurality of second cross-layer units are sequentially connected along the second direction on the circumference of the stator core 100 to form the spiral-type second winding part; and the spiral-type second winding part is connected to the second end of the connecting wire.

The first coil group also includes a first lead terminal 232, which is a first S-shaped conductor 230, and the first S-shaped conductor 230 is located at one of the outermost slot-layer and the innermost slot-layer. Exemplarily, referring to FIG. 10, the first S-shaped conductor 230 may include a second effective edge 231, a lead terminal 232, and a second twisting head 233. The second effective edge 231 may be located in a slot-layer in the stator slot 110. The lead terminal 232 is connected to the first end of the second effective edge 231; and exemplarily, the lead terminal 232 may be located at the hairpin end 120 of the stator core 100.

The second twisting head 233 is connected to the second end of the second effective edge 231. Exemplarily, the second twisting head 233 may be located at the welding end 130 of the stator core 100. The end portion of the second twisting head 233 may have a second welding end 234. The second welding end 234 may be welded to the first welding end 224 of the U-shaped conductor 220 to form a coil. The second effective edge 231 of the first S-shaped conductor 230 may be located in the first slot-layer of the stator slot 110. Exemplarily, the second effective edge 231 of the first S-shaped conductor may be connected to the first cross-layer units in the plurality of first coil units.

The second coil group also includes a second lead terminal 232, which is a second S-shaped conductor. The second S-shaped conductor is located at the other one of the outermost slot-layer and the innermost slot-layer. The structure of the second S-shaped conductor may be referred to the description of the first S-shaped conductor 230, which will not be repeated in the present embodiment. In addition, one of the first lead terminal 232 and the second lead terminal 232 is set as a lead-in wire, and the other one is set as a lead-out wire.

To facilitate understanding of the technical solutions of the embodiments of the present application, the technical solutions of the embodiments of the present application are explained below by taking a multi-phase winding 200 as an example, in which the number of phases *m* is 3, the number of poles 2P is 6, the number of slots *Q* of the stator slot 110 is 54, the number of slot-layers *M* of each stator slot 110 is 6, the number of slots per pole per phase *q* is 3, the pole pitch *τ* is 9, and each phase winding includes 2 branches.

### Embodiment 1

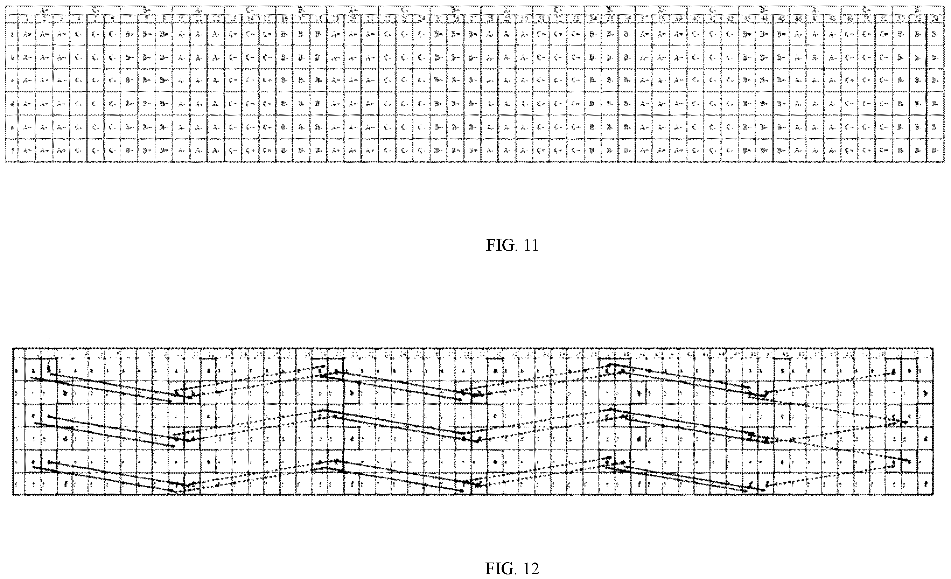

First, the phase belts of the multi-phase winding 200 are divided. A schematic diagram of the phase belt division is shown in FIG. 11.

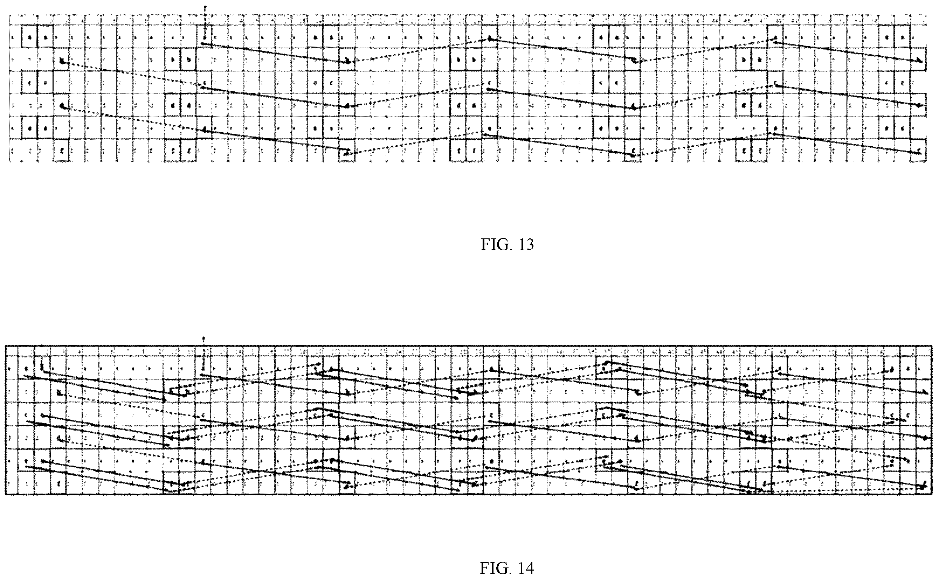

Referring to FIG. 12 to FIG. 16, the first winding part of the first branch A1X1 of phase A may enter from the slot-layer *a* of the 2nd stator slot 110 corresponding to the first magnetic pole through the first cross-layer unit, and may be gradually wound across layers along the first direction on the circumference of the stator core 100 with a span of y=9 to the slot-layer *b* of the 47th stator slot 110; then, it may be wound to the slot-layer *a* of the 1st stator slot 110 corresponding to the adjacent magnetic pole with a span of *y1*=8 through the first variable-pitch unit; further, it may be gradually wound across layers along the first direction on the circumference of the stator core 100 with a span of y=9 to the slot-layer b of the 46th stator slot 110, so as to realize the winding process of the first winding part in the slot-layer *a* and the slot-layer *b*; then, it is wound with a span of *y1*=10 to the slot-layer c of the 2nd stator slot 110 corresponding to the adjacent magnetic pole through the first variable layer line; the above winding rules are repeated to form multi-turn-type first winding parts respectively in the slot-layer c and slot-layer *d,* and in the slot-layer e and slot-layer*f*.

Subsequently, a connecting wire is wound across layers with a span of k=11 along the first direction on the circumference of the stator core 100 to the slot-layerf of the 3rd stator slot 110, and the second winding part is gradually wound across layers along the first direction on the circumference of the stator core 100 to the slot-layer *a* of the 12th stator slot 110 through a second cross-layer unit with a span of y=9; accordingly, spiral-type second winding parts are formed respectively in the slot-layer c and slot-layer *d,* and in the slot-layer *e* and slot-layer*f*.

The winding method of the first coil group of the first branch A1X1 is as follows:
referring to FIG. 12, the multi-turn-type first winding part: 2a→11b→20a→29b→ 38a→47b→1a→10b→19a→28b→37a→46b→2c→11d→20c→29d→38c→47d→1c→10d →19c→28d→37c→46d→2e→11f→20e→29f→38e→47f→1e→10f→19e→28f→37e→46f;
the connecting wire: 46f→3f.

The winding method of the second coil group of the first branch A1X1 is as follows:
spiral-type second winding part: 3f→48e→39f→30e→21f→12e→3d→48c→39d →30c→21d→12c→3b→48a→39b→30a→21b→12a.

It should be noted that the arrow direction is used for illustrating the current direction in the first coil group, the connecting wires in the same layer and the second coil group of the first branch A1X1, regardless of the winding method of the first coil group, the connecting wires and the second coil group of the first branch A1X1. Exemplarily, the winding method of the first coil group, the connecting wires and the second coil group of the first branch A1X1 may be the same as the current direction in the first coil group, the connecting wires and the second coil group of the first branch A1X1.

The winding method of the second branch A2X2 of phase A is similar to that of the first branch A1X1. The difference between them lies in that the first coil group of the second branch A2X2 of phase A enters from the slot-layer *a* of the 21st stator slot 110, and the second coil group of the second branch A2X2 of phase A enters from the slot-layer *f* of the 1st stator slot 110; the first coil group of the second branch A2X2 includes a spiral-type first winding part, and the second coil group of the second branch A2X2 includes a multi-turn-type second winding part.

The winding method of the first coil group of the second branch A2X2 is as follows:
the spiral-type first winding part: 21a←30b←39a←48b←3a←12b←21c←30d← 39c←48d←3c←12d←21e←30f←39e←48f←3e←12f;
the connecting wire: 12f→1f.

The winding method of the second coil group of the second branch A2X2 is as follows:
the multi-turn-type second winding part: 1f←46e←37f←28e←19f←10e←2f←47e ←38f←29e←20f←11e←1d←46c←37d←28c←19d←10c←2d←47c←38d←29c←20d← 11c←1b←46a←37b←28a←19b←10a←2b←47a←38b←29a←20b←11a.

It should be noted that the arrow direction is used for illustrating the current direction in the first coil group, the connecting wires and the second coil group of the second branch A2X2, regardless of the winding method of the first coil group, the connecting wires and the second coil group of the second branch A2X2. Exemplarily, the winding method of the first coil group, the connecting wires and the second coil group of the second branch A2X2 may be opposite to the current direction in the first coil group, the connecting wires and the second coil group of the second branch A2X2.

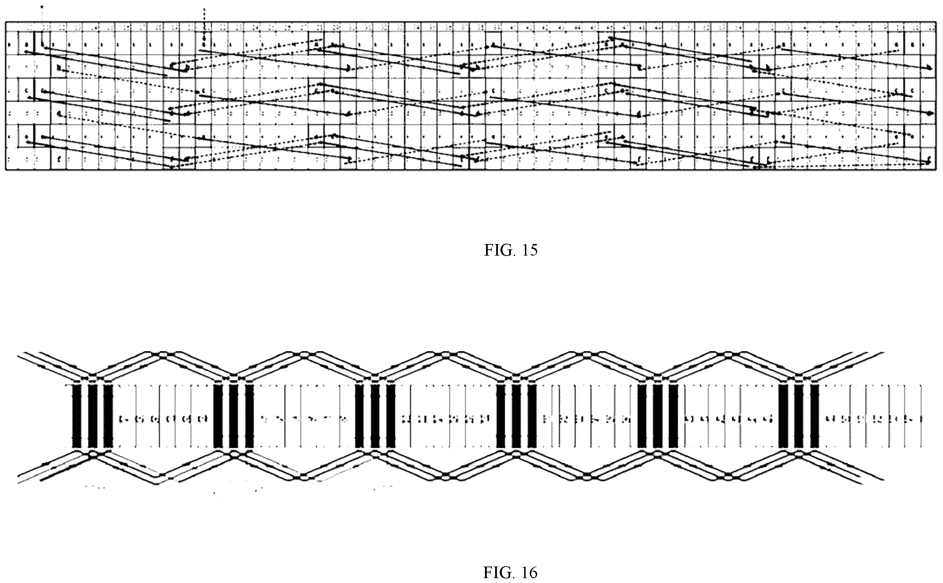

Referring to FIG. 16, an unfolded schematic diagram of the winding only shows the unfolded diagram of the phase A winding 210, and does not involve the windings of the phase B and phase C. The winding methods of phase B winding and phase C winding are the same as that of phase A winding 210, with a spatial phase difference of 120°. Specifically, the phase B winding is shifted by q (i.e., 3) stator slots 110 relative to the phase A winding, and the phase C is shifted by q stator slots 110 relative to the phase B.

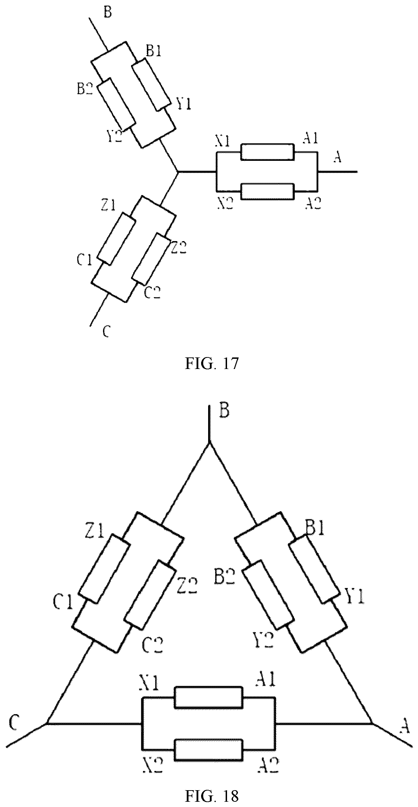

Referring to FIG. 17 and FIG. 18, the phase A winding 210, the phase B winding, and the phase C winding may be connected together in star connection. The phase A winding 210, the phase B winding, and the phase C winding may also be connected together in an angular connection.

Through this winding method, each branch can traverse the positions of the arranged phase belts and slot-layers, therefore the potential of each branch is balanced and there is no circulating current between the branches, improving the efficiency of the motor and reducing the temperature rise of the motor. In addition, the conductors in the same stator slot 110 belong to the same phase, thus there is no need to arrange insulating paper between the conductors, thereby improving the slot filling rate and the power density of the motor, and reducing the insulation cost of the motor.

### Embodiment 2

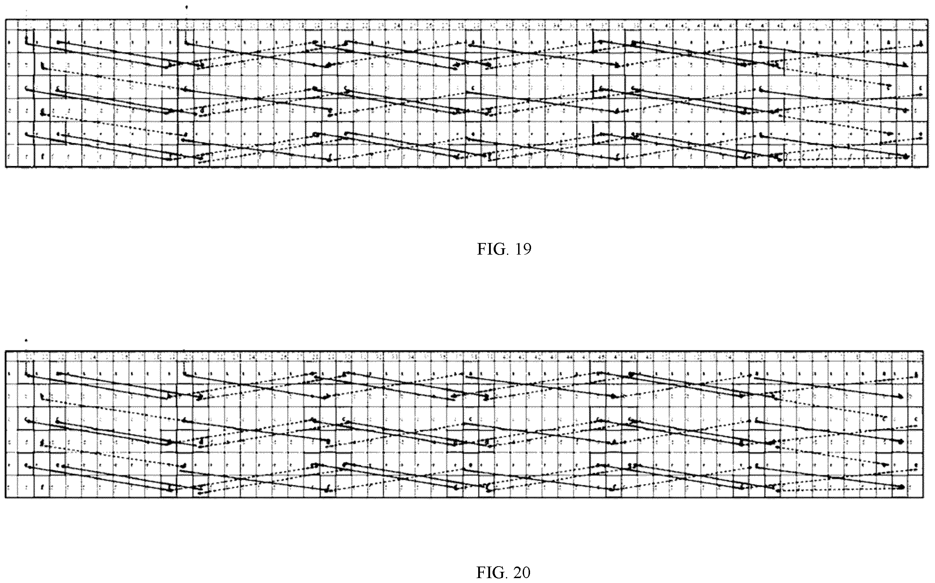

Referring to FIG. 19 and FIG. 20, the first winding part of the first branch A1X1 of phase A may enter from the slot-layer *a* of the 1st stator slot 110 corresponding to the first magnetic pole through the first cross-layer unit, and may be gradually wound cross layers along the first direction on the circumference of the stator core 100 with a span of *y*=9 to the slot-layer *b* of the 46th stator slot 110; then, it may be wound to the slot-layer *a* of the 3rd stator slot 110 corresponding to the adjacent magnetic pole with a span of *y1*=11 through the first variable-pitch unit; further, it may be gradually wound cross layers along the first direction on the circumference of the stator core 100 with a span of *y*=9 to the slot-layer b of the 48th stator slot 110, so as to realize the winding process of the first winding part in the slot-layer *a* and the slot-layer *b*; then, it is wound with a span of *y*l=1 to the slot-layer c of the 1st stator slot 110 corresponding to the adjacent magnetic pole through the first variable layer line; the above winding rules are repeated to form multi-turn-type first winding parts in the slot-layer c and slot-layer *d,* and in the slot-layer e and slot-layer f respectively.

Subsequently, a connecting wire is wound across layers with a span of k=8 along the first direction on the circumference of the stator core 100 to the slot-layer *f* of the 2nd stator slot 110, and the second winding part is gradually wound across layers along the first direction on the circumference of the stator core 100 to the slot-layer *a* of the 11th stator slot 110 through a second cross-layer unit with a span of *y*=9, thereby forming spiral-type second winding parts in the slot-layer *c* and slot-layer *d,* and in the slot-layer *e* and slot-layer*f* respectively.

The winding method of the first coil group of the first branch A1X1 is as follows:
the multi-turn-type first winding part: 1a→10b→19a→28b→37a→46b→3a→12b →21a→30b→39a→48b→1c→10d→19c→28d→37c→46d→3c→12d->21c->30d->39c-> 48d→1e→10f→19e→28f→37e→46f→3e→12f→21e→30f→39e→48f;
the connecting wire: 48f→2f.

The winding method of the second coil group of the first branch A1X1 is as follows:
the spiral-type second winding part: 2f→47e→38f→2ge→20f→11e→2d→47c→ 38d→29c→20d→11c→2b→47a→38b→29a→20b→11a.

The arrow direction is used for illustrating the current direction in the first coil group, the connecting wires in the same layer and the second coil group of the first branch A1X1, regardless of the winding method of the first coil group, the connecting wires in the same layer and the second coil group of the first branch A1X1. Exemplarily, the winding method of the first coil group, the connecting wires and the second coil group of the first branch A1X1 may be the same as the current direction in the first coil group, the connecting wires and the second coil group of the first branch A1X1.

The winding method of the second branch A2X2 of phase A is similar to that of the first branch A1X1. The difference between them lies in that the first coil group of the second branch A2X2 of phase A enters from the slot-layer a of the 20th stator slot 110, and the second coil group of the second branch A2X2 of phase A enters from the slot-layer*f* of the 3rd stator slot 110; the first coil group of the second branch A2X2 includes a spiral-type first winding part, and the second coil group of the second branch A2X2 includes a multi-turn-type second winding part.

The winding method of the first coil group of the second branch A2X2 is as follows:
the spiral-type first winding part: 20a←29b←38a←47b←2a←11b←20c←29d← 38c←47d←2c←11d←20e←29f←38e←47f←2e←11f;
the connecting wire: 11f→3f.

The winding method of the second coil group of the second branch A2X2 is as follows:
the multi-turn-type second winding part: 3f←48e←39f←30e←21f←12e←1f←46e ←37f←28e←19f←10e←3d←48c←39d←30c←21d←12c←1d←46c←37d←28c←19d← 10c←3b←48a←39b←30a←21b←12a←1b←46a←37b←28a←19b←10a.

The arrow direction is used for illustrating the current direction in the first coil group, the connecting wires and the second coil group of the second branch A2X2, regardless of the winding method of the first coil group, the connecting wires and the second coil group of the second branch A2X2. Exemplarily, the winding method of the first coil group, the connecting wires and the second coil group of the second branch A2X2 may be opposite to the current direction in the first coil group, the connecting wires and the second coil group of the second branch A2X2.

The phase A winding 210, the phase B winding, and the phase C winding may be connected together in star connection. The phase A winding 210, the phase B winding, and the phase C winding may also be connected together in an angular connection.

### Embodiment 3

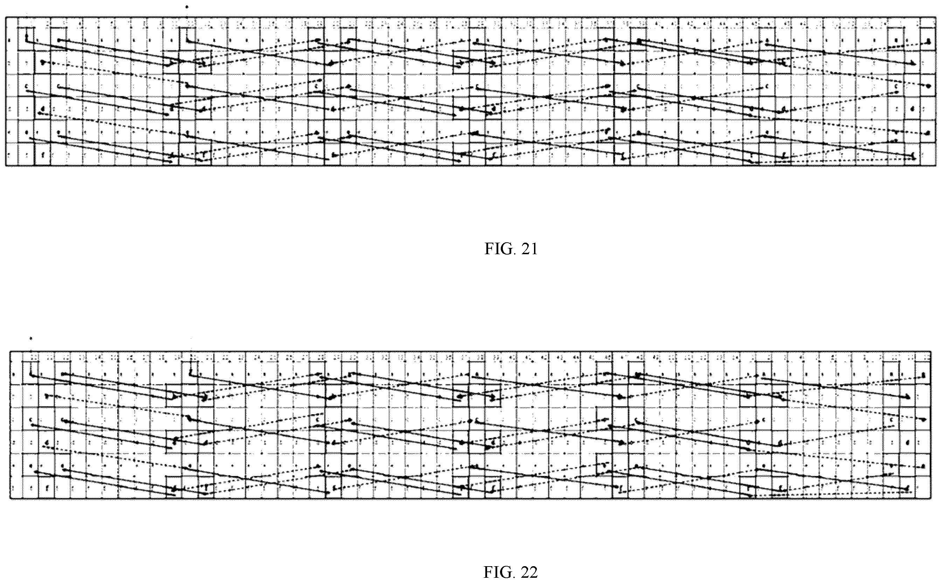

Referring to FIG. 21 and FIG. 22, the first winding part of the first branch A1X1 of phase A may enter from the slot-layer *a* of the 1st stator slot 110 corresponding to the first magnetic pole through the first cross-layer unit, and may be gradually wound cross layers along the first direction on the circumference of the stator core 100 with a span of *y*=9 to the slot-layer *b* of the 46th stator slot 110; then, it may be wound to the slot-layer *a* of the 3rd stator slot 110 corresponding to the adjacent magnetic pole with a span of *y1*=11 through the first variable-pitch unit; further, it may be gradually wound cross layers along the first direction on the circumference of the stator core 100 with a span of *y*=9 to the slot-layer b of the 48th stator slot 110, so as to realize the winding process of the first winding parts in the slot-layer *a* and the slot-layer *b*; then, it is wound with a span of *y1=*9 to the slot-layer c of the 3rd stator slot 110 corresponding to the adjacent magnetic pole through the first variable layer line; the above winding rules are repeated to form multi-turn-type first winding parts in the slot-layer *c* and slot-layer *d,* and in the slot-layer *e* and slot-layer*f* respectively.

Subsequently, a connecting wire is wound across layers with a span of *k*=10 along the first direction on the circumference of the stator core 100 to the slot-layer *f* of the 2nd stator slot 110, and the second winding part is gradually wound across layers along the first direction on the circumference of the stator core 100 to the slot-layer *a* of the 11th stator slot 110 through the second cross-layer unit with a span of *y*=9, thereby forming spiral-type second winding parts in the slot-layer c and slot-layer *d,* and in the slot-layer *e* and slot-layer*f* respectively.

The winding method of the first coil group of the first branch A1X1 is as follows:
the multi-turn-type first winding part: 1a→10b→19a→28b→37a→46b→3a→12b →21a→30b→39a→48b→3c→12d→21c→30d→39c→48d→1c→10d→19c->28d->37c-> 46d→3e→12f→21e→30f→39e→48f→1e→10f→19e→28f→37e→46f;
the connecting wire: 46f→2f.

The winding method of the second coil group of the first branch A1X1 is as follows:
the spiral-type second winding part: 2f→47e→38f→29e→20f→11e→2d→47c→ 38d→29c→20d→11c→2b→47a→38b→29a→20b→11a.

The arrow direction is used for illustrating the current direction in the first coil group, the connecting wires in the same layer and the second coil group of the first branch A1X1, regardless of the winding method of the first coil group, the connecting wires in the same layer and the second coil group of the first branch A1X1. Exemplarily, the winding method of the first coil group, the connecting wires and the second coil group of the first branch A1X1 may be the same as the current direction in the first coil group, the connecting wires and the second coil group of the first branch A1X1.

The winding method of the second branch A2X2 of phase A is similar to that of the first branch A1X1. The difference between them lies in that the first coil group of the second branch A2X2 of phase A enters from the slot-layer *a* of the 20th stator slot 110, and the second coil group of the second branch A2X2 of phase A enters from the slot-layer f of the 1st stator slot 110; the first coil group of the second branch A2X2 includes the spiral-type first winding part, and the second coil group of the second branch A2X2 includes the multi-turn-type second winding part.

The winding method of the first coil group of the second branch A2X2 is as follows:
the spiral-type first winding part: 20a←29b←38a←47b←2a←11b←20c←29d← 38c←47d←2c←11d←20e←29f←38e←47f←2e←11f;
the connecting wire: 11f→3f.

The winding method of the second coil group of the second branch A2X2 is as follows:
the multi-turn-type first winding part: ←1f←46e←37f←28e←19f←10e←3f← 48e←39f←30e←21f←12e←1d←46c←37d←28c←19d←10c←3d←48c←39d←30c←21d ←12c←3b←48a←39b←30a←21b←12a←1b←46a←37b←28a←19b←10a.

The arrow direction is used for illustrating the current direction in the first coil group, the connecting wires and the second coil group of the second branch A2X2, regardless of the winding method of the first coil group, the connecting wires and the second coil group of the second branch A2X2. Exemplarily, the winding method of the first coil group, the connecting wires and the second coil group of the second branch A2X2 may be opposite to the current direction in the first coil group, the connecting wires and the second coil group of the second branch A2X2.

The phase A winding 210, the phase B winding, and the phase C winding may be connected together in star connection. The phase A winding 210, the phase B winding, and the phase C winding may also be connected together in an angular connection.

### Embodiment 4

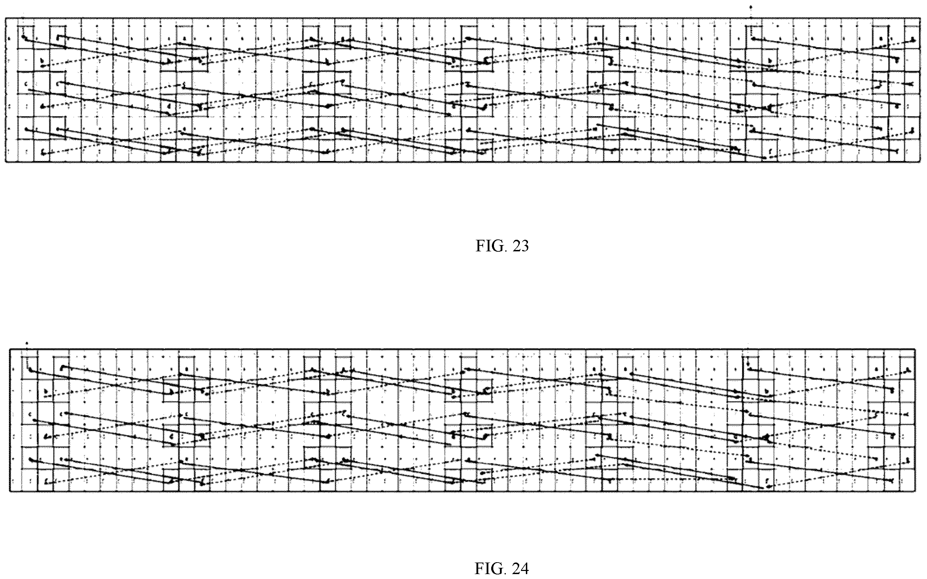

Referring to FIG. 23 and FIG. 24, the first winding part of the first branch A1X1 of phase A may enter from the slot-layer *a* of the 1st stator slot 110 corresponding to the first magnetic pole through the first cross-layer unit, and may be gradually wound cross layers along the first direction on the circumference of the stator core 100 with a span of y=9 to the slot-layer *b* of the 28th stator slot 110; then, it may be wound to the slot-layer *a* of the 39th stator slot 110 corresponding to the adjacent magnetic pole with a span of yl=11 through the first variable-pitch unit; further, it may be gradually wound cross layers along the first direction on the circumference of the stator core 100 with a span of y=9 to the slot-layer b of the 30th stator slot 110; then, it may be wound to the slot-layer *a* of the 37th stator slot 110 corresponding to the adjacent magnetic pole with a span of yl=1 through the first variable-pitch unit; then, it is wound with a span of y=9 through the first variable-pitch unit to the slot-layer *b* of the 46th stator slot 110, so as to realize the winding process of the first winding parts in the slot-layer *a* and the slot-layer *b*; then, it is wound with a span of *y1=11* to the slot-layer *c* of the 3rd stator slot 110 corresponding to the adjacent magnetic pole through the first variable layer line; the above winding rules are repeated to form multi-turn-type first winding parts in the slot-layer *c* and slot-layer *d,* and in the slot-layer *e* and slot-layer*f* respectively.

Subsequently, a connecting wire is wound across layers with a span of *k*=8 along the first direction on the circumference of the stator core 100 to the slot-layer *f* of the 38th stator slot 110, and the second winding part is gradually wound across layers along the first direction on the circumference of the stator core 100 to the slot-layer *a* of the 47th stator slot 110 through the second cross-layer unit with a span of y=9, thereby forming spiral-type second winding parts in the slot-layer c and slot-layer *d,* and in the slot-layer e and slot-layer*f* respectively.

The winding method of the first coil group of the first branch A1X1 is as follows:
the multi-turn-type first winding part: 1a→10b→19a→28b→39a→48b→3a→12b →21a→30b→37a→46b→3c→12d→21c→30d→37c→46d→1c→10d→19c->28d->39c-> 48d→1e→10f→19e→28f→39e→48f→3e→12f→21e→30f→37e→46f;
the connecting wire: 46f→38f.

The winding method of the second coil group of the first branch A1X1 is as follows:
the spiral-type second winding part: 38f→29e→20f→11e→2f→47e→38d→29c→ 20d→11c→2d→47c→38b→29a→20b→11a→2b→47a.

The arrow direction is used for illustrating the current direction in the first coil group, the connecting wires in the same layer and the second coil group of the first branch A1X1, regardless of the winding method of the first coil group, the connecting wires in the same layer and the second coil group of the first branch A1X1. Exemplarily, the winding method of the first coil group, the connecting wires and the second coil group of the first branch A1X1 may be the same as the current direction in the first coil group, the connecting wires and the second coil group of the first branch A1X1.

The winding method of the second branch A2X2 of phase A is similar to that of the first branch A1X1. The difference between them lies in that the first coil group of the second branch A2X2 of phase A enters from the slot-layer *a* of the 20th stator slot 110, and the second coil group of the second branch A2X2 of phase A enters from the slot-layer f of the 1st stator slot 110; the first coil group of the second branch A2X2 includes the spiral-type first winding part, and the second coil group of the second branch A2X2 includes the multi-turn-type second winding part.

The winding method of the first coil group of the second branch A2X2 is as follows:
the spiral-type first winding part: 2a←11b←20a←29b←38a←47b←2c←11d← 20c←29d←38c←47d←2e←11f←20e←29f←38e←47f;
the connecting wire: 47f→1f.

The winding method of the second coil group of the second branch A2X2 is as follows:
the multi-turn-type second winding part: 1f←46e←39f←30e←21f←12e←3f←48e ←37f←28e←19f←10e←3d←48c←37d←28c←19d←10c←1d←46c←39d←30c←21d← 12c←1b←46a←39b←30a←21b←12a←3b←48a←37b←28a←19b←10a.

The arrow direction is used for illustrating the current direction in the first coil group, the connecting wires and the second coil group of the second branch A2X2, regardless of the winding method of the first coil group, the connecting wires and the second coil group of the second branch A2X2. Exemplarily, the winding method of the first coil group, the connecting wires and the second coil group of the second branch A2X2 may be opposite to the current direction in the first coil group, the connecting wires and the second coil group of the second branch A2X2.

The phase A winding 210, the phase B winding, and the phase C winding may be connected together in star connection. The phase A winding 210, the phase B winding, and the phase C winding may also be connected together in an angular connection.

A motor is also provided by the embodiments of the present application, including any of the above-mentioned stator assemblies. Since the motor of the embodiments of the present application includes any of the above-mentioned stator assemblies, the motor also has the advantages of any of the above-mentioned stator assemblies, which will not be repeated by the embodiment of the present application.

So far, the technical solutions of the present application have been described in conjunction with the embodiments shown in the drawings, but it is easy for the person skilled in the art to understand that the protection scope of the present application is obviously not limited to these specific embodiments. On the premise of not departing from the principles of the present application, the person skilled in the art can make equivalent modifications or substitutions to the relevant technical features, and the technical solutions after these modifications or substitutions will fall within the protection scope of the present application.

## Claims

1. A stator assembly, applied to a motor, comprising a stator core and a multi-phase winding, wherein the stator core is provided with a plurality of stator slots along a circumferential direction of the stator core, and each of the stator slots has M slot-layers arranged along a radial direction of the stator core, and M is an even number greater than or equal to 4;
each phase of the winding comprises at least two parallel branches, and each of the branches comprises a first coil group, a second coil group, and a connecting wire for connecting the first coil group and the second coil group;
the first coil group comprises N first winding parts and N-1 first variable-layer lines, and the N first winding parts are sequentially arranged along the radial direction of the stator core, wherein N=M/2; each of the first winding parts is correspondingly arranged in two adjacent layers of the slot-layers, and the first winding part is configured as follows: in corresponding two layers of the slot-layers, the first winding part is formed by connecting a plurality of coil sets in series, each coil set comprises one or two of a first cross-layer unit and a first variable-pitch unit, and at least one coil set of the plurality of coil sets comprises the first cross-layer unit and the first variable-pitch unit; a span y of the first cross-layer unit is set as a pole pitch of the motor, and a span of the first variable-pitch unit is greater than or less than the pole pitch of the motor; each first variable-layer line connects two adjacent first winding parts, and a span *y1* of the first variable-layer line is set as: *y-*2≤*y1≤y+*2;
the second coil group comprises N second winding parts and N-1 second variable-layer lines, the N second winding parts are sequentially arranged along the radial direction of the stator core; each of the second winding parts is correspondingly arranged in two adjacent layers of the slot-layers, and the second winding part is configured as follows: in corresponding two layers of the slot-layers, the second winding part enters from one of the slot-layers, and is sequentially wound across layers along a second direction on a circumference of the stator core with a span y, and the second direction is different from the first direction; the second variable-layer line connects two adjacent second winding parts, and a span *y*2 of the second variable-layer line is set as: y2=y; and
a first end of the connecting wire is connected to a terminal end of the first winding part, a second end of the connecting wire is connected to a starting end of the second winding part, and a span k of the connecting wire is set as: y-2≤k≤y+2.

2. The stator assembly according to claim 1, wherein the first winding part is configured as a multi-turn-type first winding part; in the corresponding two layers of the slot-layers, one end of the first cross-layer unit is arranged in one of the slot-layers, and the other end of the first cross-layer unit is arranged in the other slot-layer; one end of the first variable-pitch unit is arranged in one of the slot-layers, and the other end of the first variable-pitch unit is arranged in the other slot-layer; and
the plurality of first cross-layer units are connected in series along the first direction on the circumference of the stator core, and the first variable-pitch unit is configured for connecting two adjacent first cross-layer units of the multi-turn-type first winding part; in the two adjacent first cross-layer units in different turns of the multi-turn-type first winding part, one end of the first variable-pitch unit is connected to one of the first cross-layer units, and the other end of the first variable-pitch unit is connected to the other first cross-layer unit.

3. The stator assembly according to claim 2, wherein in the multi-turn-type first winding part, the first cross-layer unit is set as a U-shaped first cross-layer unit, and the first variable-pitch unit is set as a U-shaped first variable-pitch unit; in the corresponding two layers of the slot-layers, an end portion of the U-shaped first cross-layer unit is connected to an end portion of another adjacent U-shaped first cross-layer unit, and the end portion of the U-shaped first cross-layer unit is connected to an end portion of the adjacent U-shaped first variable-pitch unit; and/or,
in the multi-turn-type second winding part, the second cross-layer unit is set as a U-shaped second cross-layer unit, and the second variable-pitch unit is set as a U-shaped second variable-pitch unit; in the corresponding two layers of the slot-layers, an end portion of the U-shaped second cross-layer unit is connected to an end portion of another adjacent U-shaped second cross-layer unit, and the end portion of the U-shaped second cross-layer unit is connected to an end portion of the adjacent U-shaped second variable-pitch unit.

4. The stator assembly according to claim 1, wherein the second winding part is configured as a spiral-type second winding part, and a plurality of the second cross-layer units are sequentially connected along the second direction on the circumference of the stator core to form the spiral-type second winding part, and the spiral-type second winding part is connected to a second end of the connecting wire.

5. The stator assembly according to claim 1, wherein the connecting wire is wound in an outermost layer of the slot-layers or an innermost layer of the slot-layers with the span k, and the connecting wire is arranged along the first direction, or the connecting wire is arranged along the second direction.

6. The stator assembly according to claim 1, wherein the first coil group further comprises a first lead terminal, the first lead terminal is a first S-shaped conductor, and the first S-shaped conductor is located at one of an outermost layer of the slot-layers and an innermost layer of the slot-layers;
the second coil group further comprises a second lead terminal, the second lead terminal is a second S-shaped conductor, and the second S-shaped conductor is located at the other of the outermost layer of the slot-layers and the innermost layer of the slot-layers.

7. The stator assembly according to claim 6, wherein one of the first lead terminal and the second lead terminal is configured as a lead-in wire, and the other one is configured as a lead-out wire.

8. The stator assembly according to claim 1, wherein the stator slots are 54 in number, a magnetic pole is 6 in number, and the pole pitch is set to 9.

9. The stator assembly according to any one of claims 1 to 8, wherein the multi-phase winding is configured as a three-phase winding, each phase of the windings has same winding rule on the stator core with a phase difference in spatial phase between every two phases of the winding being set to 120°, and the three-phase winding is configured in a star connection or an angular connection.

10. A motor, comprising the stator assembly according to any one of claims 1 to 9.
